# EUROPEAN PATENT APPLICATION

(11) **EP 0 858 920 A2**
(43) Date of publication of application: **19.08.1998**
(21) Application number: 98100689.3
(22) Date of filing: 16.01.1998
(51) Int. Cl.: B60J 1/16

(54) **Antitheft drawn element for the sliding windows of motor vehicles**

(30) Priority: 18.02.1997 IT MI970118 U
(71) Applicant: Sguinzi Pietro S.p.A., 20083 Gaggiano (MI) (IT)
(72) Inventor: Sguinzi, Angelo, 20013 Magenta (MI) (IT)
(74) Representative: Klausner, Erich

(57) **Abstract**

A drawn element (20) to be mounted on the edges of glasses of a motor vehicle window, at least one of which being movable, is designed to hinder the introduction of picking tools between the two glasses, thereby preventing the latter from being spaced apart as well as preventing a flexible picking element to hook the opening handle. The drawn element is provided, at its front corner (25) arranged at the side of a T-shaped hollow (24) for a brush element (40), with a tongue (26) projecting from the mouth of the hollow (23) engaging the glass edge, so as to extend from the middle line (C) of the overlapping tract (S) of the edges of the window glasses in their closure condition.

## Description

The present invention relates to an antitheft drawn element for the sliding window glasses of motor vehicles.

For aerating the drive cab of commercial vehicles or buses, horizontally sliding glasses are generally used in order to allow at least a partially opening of the windows.

These windows are usually vertically split at their middle portion and, of the two closure glasses, the fixed glass is usually engaged in the inner channel of a drawn element peripherally applied to the window opening, in a rear position with respect to the motor vehicle moving direction, whereas the movable glass is arranged in a front position and slides in the outer channel.

In a closed-window condition, the vertical edges of the two glasses overlap for a small tract and they are both provided with a metal vertical drawn element fitted in an opposite manner on the two glasses, the purpose of which drawn element being to retain a resilient gasket, for instance a brush element, to prevent air, powder or water from entering the motor vehicle cab while the motor vehicle is in movement or stationary with its window in a closed condition.

The aim of the present invention is to modify the above mentioned vertical drawn element to prevent any pick-ing tools from being introduced between the two glasses and to prevent said glasses from being moved apart.

According to the present invention, the drawn element fitted at the vertical edge of each glass is provided with an integral extruded tongue arranged at that corner of the drawn element which is opposite, in the drawn element assembled condition, to the corner of the drawn element which is mirror-like fitted on the edge of the other glass, and which corner is inside the space between said edges so as to provide, when said tongues overlap, a labyrinth through which a flexible picking means cannot penetrate, and to cause said tongues, if the glasses are forced by a lever or wedge element, to move progressively towards one another, thereby preventing any flexible wires from being introduced therebetween to hook the motor vehicle locking handle in order to unlock it.

The invention will become more clear from the following disclosure of an embodiment thereof, with reference to the accompanying exemplary but not limitative drawings, wherein:
Figure 1 is a front elevation view illustrating a window of a motor vehicle, provided with a fixed glass and a horizontally sliding glass;
Figure 2 illustrates, as an example of the prior art, the opposite edges of the two glasses of an openable window, provided with a vertical drawn element known in the art;
Figure 3 illustrates, on an enlarged scale, the cross-section of the drawn element according to the present invention; and
Figure 4 illustrates a cross-sectional view of the window taken along the line IV-IV of Figure 1 wherein the opposite vertical edges of the fixed and movable glasses are provided with a drawn element according to the present invention.

In the Figures, like elements have been indicated by like reference numbers.

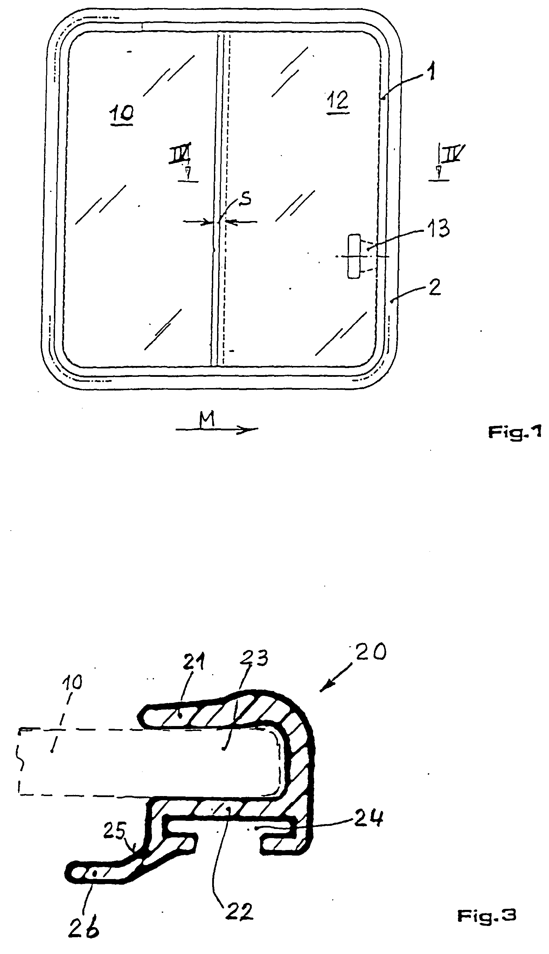

In Figure 1 is illustrated a front view of the window of a motor vehicle having a peripheral frame formed by a drawn element 1 provided with a double channel and mounted, in a per se known manner, in the window opening through a rubber gasket 2.

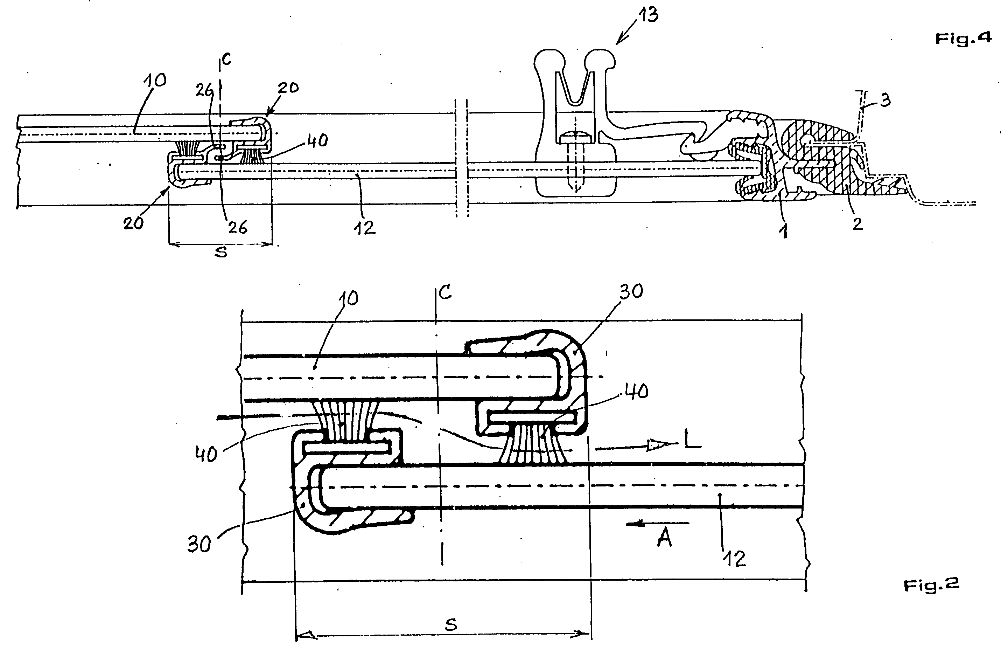

Supposing that the driving direction of the motor vehicle is that indicated by the arrow M, then reference numeral 10 would indicate the fixed glass engaged in the inner channel of the drawn element 1, and 12 the movable glass sliding in the outer channel. The movable glass 12 can be displaced by acting on the handle 13 which also operates as a safety locking device, as shown in Figure 4.

The glasses 10 and 12, in their closing condition, with the movable glass 12 in a closed condition, overlap for a tract having a width S.

According to the state of the art, the drawn elements 30 applied to the vertical edges of the two glasses of a half-openable window are designed and arranged as shown in Figure 2, i.e. with the fixed glass 10 arranged in an inward position with respect to the vehicle, while the outer movable glass 12 can be opened, as shown in this Figure, in the direction of the arrow A.

The known opposite drawn elements 30 (Figure 2), fitted on the edges of the glasses 10 and 12, although each one is provided with a conventional sealing gasket 40 consisting in a bristle brush element for preventing air from passing therethrough, allow any flexible means L, generally a flexible metal wire, like that used by ill-intentioned persons, to easily pass therethrough in order to unlock the handle 13 of the movable glass portion and have access to the motor vehicle driving cab.

This can be achieved inasmuch as it is possible for the two glasses to be spaced apart by a lever or wedge element introduced therebetween, thereby allowing the picking metal wire to pass therethrough in order to unlock the handle 13.

Figure 3 illustrates the novel drawn element 20 according to the invention.

Said drawn element 20, which partly resembles the known drawn element 30 shown in Figure 2, substantially comprises a U-shaped element the legs 21 and 22 of which provide internally a parallel wall hollow 23 having a width depending on the thickness of the glasses 10 and 12, whereby an edge portion of the latter can be engaged and forcibly retained in the drawn element.

A T-shaped hollow 24, adjoining the leg 22, retains in a per se known manner a brush element 40, shown in Figure 2, which operates as an air sealing gasket.

At the corner 25 of the leg 22 of the end drawn element 20, on the side of the T-shaped hollow 24, is provided, according to the invention, a tongue 26 which is drawn as a single-piece and extends beyond the mouth of the hollow 23, projecting by several millimeters, for example from 1 to 10 mm, from the middle line C of the glasses overlapping tract S, when the window is in its closed condition (see Figure 4).

With the above disclosed design, as is shown in Figure 4, the tongues 26 constitute an efficient labyrinth barrier against any possibile introduction of flexible picking means while at the same time preventing the glasses from being spaced apart by a lever, the introduction of which between the two glasses causes the glasses to approach each other thus closing the gap therebetween.

## Claims

1. A drawn element for the windows of motor vehicles of the type generally provided with two glasses (10, 12) at least one of which glasses can be opened by a horizontal displacement, and in which windows the opposite edges of said glasses, in their closed position, overlap for a tract (S) and are each one engaged with a U-shaped drawn element (20), the legs (21 and 22) of which provide internally a parallel wall hollow (23) having a width depending on the thickness of the glasses (10; 12), on the edge of which glasses said drawn element is forcibly fitted, said drawn element having, on the back of one of its legs (22), a T-shaped hollow (24) retaining a brush element (40) bearing on and wiping the surface of the opposite glass, characterized in that the U-shaped drawn element (20), at the bottom front corner (25) (Figure 3), near and adjacent to the mouth of said hollow (23) receiving the edge of either of said window glasses (10, 12) and laterally of said T-shaped hollow (24), is provided with a tongue (26) extending parallelly to the parallel inner walls of said hollow (23), said tongue projecting beyond the mouth of said hollow (23) so as to extend beyond the middle line (C) of the overlapping tract (S) of the window glasses (10, 12), at their closed condition, on the edges of which glasses said drawn element (20) is mounted.
